# EUROPEAN PATENT APPLICATION

(11) **EP 2 581 506 A1**
(43) Date of publication of application: **17.04.2013**
(21) Application number: 11185300.8
(22) Date of filing: 14.10.2011
(51) Int. Cl.: E02F 9/28, E02F 3/96, B23D 35/00

(54) **Wear pack for a demolition tool**

(71) Applicant: Caterpillar Work Tools B. V., 5232 BJ 's-Hertogenbosch (NL)
(72) Inventor: Van Gemert, John, 5451 MILL (NL)
(74) Representative: Modiano, Micaela Nadia

(57) **Abstract**

A wear pack is disclosed for shielding a front end of a jaw set of a demolition tool. The wear pack may have a position portion provided on a bracket member for the alignment thereof prior to mounting. The wear pack may have a force transfer portion provided on the bracket member for the transfer of demolition forces to the front end of the jaw. The positioning portion may be contiguous with the force transfer portion.

## Description

### Technical Field

This disclosure relates to the field of demolition tools for crushing and/or cutting material and more particularly to the field of wear packs for demolition tools.

### Background

A demolition tool for crushing and/ or cutting material is generally known. Typically, the demolition tool may comprise a jaw set having a lower jaw and an upper jaw. The upper and lower jaws may be pivotally connected. The upper and lower jaws may be moveable relative to each other.. Blades may be provided on both the upper jaw and the lower jaw. The work material may be crushed or cut by closing the upper jaw against the lower jaw under hydraulic pressure.

The demolition tool may comprise a frame that connects the jaw set to a jib of a machine.

The demolition tool may have a jaw set that is suitable for crushing concrete. The jaw set may be adapted for crushing or cutting other materials, for example for cutting scrap iron and/or iron sections. The abrasive nature or hardness of some of these materials may cause the relatively rapid wear of the surfaces that engage the materials.

The demolition tool may be provided with replaceable wear parts that have wear surfaces. A type of replaceable wear part may be a wear pack. The wear pack may be connected directly to the jaw set by conventional techniques. The wear pack may be provided on the upper and/ or the lower jaw. The wear pack may be retained by fasteners that are exposed to relatively high stresses during operation.

The present disclosure is directed, at least in part, to improving or overcoming one or more aspects of the prior art system.

### Brief Summary of the Invention

In a first aspect, the present disclosure describes a wear pack for a jaw of a demolition tool, the wear pack may comprise a wear member for shielding a front end of the jaw, the wear member having a contact surface to rest against the front end; and a bracket member projecting from the wear member for coupling the front end and having a mounting surface configured for mating to a reciprocal mounting surface on the front end, wherein the mounting surface comprises a positioning portion contiguous with a force transfer portion.

In a second aspect, the present disclosure describes a method of assembling a wear pack on a jaw of a demolition tool, the method comprising the steps of providing a wear member for shielding the front end of the jaw, the wear member having a contact surface to rest against the front end; providing a bracket member projecting from the wear member and having a mounting surface configured for mating a reciprocal mounting surface on the front end, the mounting surface having positioning portion contiguous with a force transfer portion; and engaging the positioning portion to a reciprocal positioning portion on the reciprocal mounting surface.

### Brief Description of the Drawings

The foregoing and other features and advantages of the present disclosure will be more fully understood from the following description of various embodiments, when read together with the accompanying drawings, in which:
Fig. 1 is an isometric view of a wear pack according to the present disclosure;
Fig. 2 is an isometric view of a wear pack of Fig. 1 mounted to a jaw set of a demolition tool;
Fig. 3 is a cross-section view of the wear pack mounted to the jaw set in Fig. 2;
Fig. 4 is an isometric view of a second embodiment of a wear pack according to the present disclosure; and
Fig. 5 is a cross-section view of the wear pack of Fig. 4 mounted to a jaw set
Fig. 6A is a cross-section view of a wear pack of Fig. 1 in an approach to the jaw set of a demolition tool;
Fig. 6B is a cross-section view of a wear pack of Fig. 1 in an initial engagement with the jaw set;
Fig. 6C is a cross-section view of a wear pack of Fig. 1 rotated at the point of initial engagement relative to the jaw set;
Fig. 6D is a cross-section view of a wear pack of Fig. 1 at the end of rotation relative to the jaw set.

### Detailed Description

This disclosure generally relates to a wear pack 10 for assembly onto a jaw set of a demolition tool.

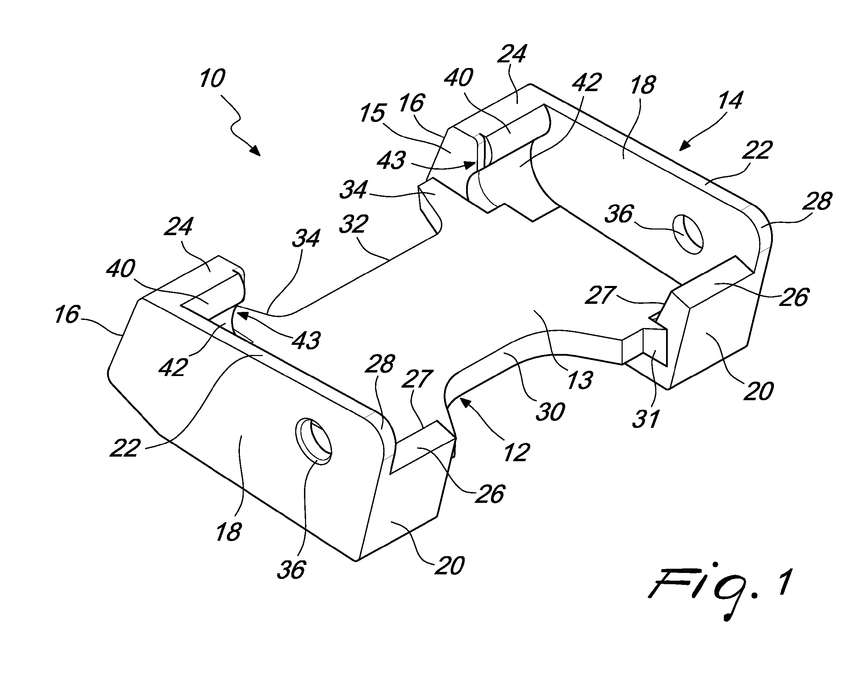

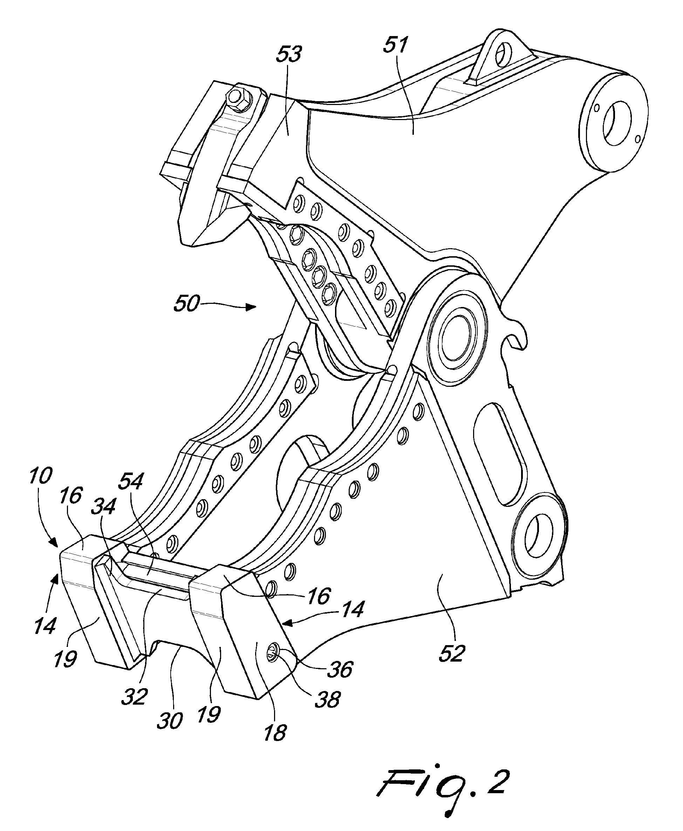

Fig. 1 illustrates the wear pack **10**. The wear pack **10** may be composed of a material or a composite of materials that are resistant to wear due to operation of the demolition tool. The wear pack **10** may be composed of high strength steel. Fig. 2 illustrates the wear pack **10** mounted to a jaw set **50** of a demolition tool. Although the wear pack **10** is shown mounted to a jaw **52** of the jaw set **50**, the present disclosure should not to be limited to this embodiment.

The wear pack **10** may be configured to fit to an upper jaw **51** or the lower jaw **52** of the jaw set **50**. The wear pack **10** may be configured to fit to a front end **53** of the jaw **51** or a front end **54** of the jaw **52**. The front ends **53, 54** may be the free ends that are opposite the pivotally connected ends of the jaws **51, 52**.

With reference to Fig.1, the wear pack **10** may comprise a wear member **12**. The wear member **12** may have a shape which corresponds to the front end **54**. The wear member **12** may be adapted to shield the front end **54**. The wear member **12** may have a shape and dimension suitable to contact and protect the front end **54**. The wear member **12** may be suitably modified so as to contact and protect the front end **54**.

In an embodiment. the wear member **12** may be elongated and may have a substantially rectangular shape. In an embodiment. the wear member **12** may be formed as a plate.

The wear member **12** may have a contact surface **13**. The contact surface **13** may be formed on a side of the wear member **12**. The contact surface **13** may be formed across the entire side of the wear member **12**.

In an embodiment, the contact surface **13** may be formed on a portion of the side of the wear member **12**. In an embodiment, the contact surface **13** may be a body that protrudes from the wear member **12**.

The contact surface **13** may rest against the front end **54**. The contact surface **13** may have a shape and dimension suitable to rest against and protect the front end **54**. The contact surface 13 may be suitably modified to rest against and protect the front end **54** of a specific jaw set.

The wear member **12** may have a first indent **30**. The first indent **30** may be formed on an edge of the wear member **12**. With the wear member **12** having a substantially rectangular shape, the first indent **30** may be formed on a longer edge and may be centrally positioned. The shape and dimension of the first indent **30** may correspond to an indented portion on the front end **54**.

In an embodiment, the first indent **30** may have a straight centre segment that is connected between inclined end segments. The centre segment may be parallel to the longitudinal axis of the wear member **12**. The end segments may be inclined relative to the longitudinal axis of the wear member **12**.

The wear member **12** may have a pair of first bosses **31** positioned on the same edge of the wear member **12** having the first indent **30**. The first bosses **31** may be disposed on either side of the first indent **30**. The first bosses **31** may be spaced from the first indent **30**. In an embodiment, the first bosses **31** may flank the first indent **30** such that the inclined end segments are continuos with the first bosses **31**.

The wear member **12** may have a second indent **32**. The second indented **32** may be formed on an edge of the wear member **12** opposite to the edge having the first indent **30**. The second indent **32** may be centrally positioned. The shape and dimension second indent **32** may correspond to an additional indented portion on the front end **54**.

In an embodiment, the second indent portion **32** may have a straight centre segment that is connected between inclined end segments. The centre segment may be parallel to the longitudinal axis of the wear member **12**. The centre segment of the second indent **32** may be parallel to the centre segment of the first indent **30**. The end segments may be inclined relative to the longitudinal axis of the wear member **12**.

The wear member **12** may have a pair of second bosses **34** positioned on the same edge of the wear member **12** having the second indent **32**. The second bosses **34** may be disposed on either side of the second indent **32** such that each inclined end segment forms a side of each second boss **34**. In an embodiment, the second bosses **34** may be spaced from the second indent **32**.

The wear pack **10** may have a bracket member **16**. The bracket member **16** may enable the wear pack **10** to be mounted to the front end **54**. In an embodiment, the bracket member **16** may be formed as a block.

The bracket member **16** may be connected to the wear member **12**. The bracket member **16** may be suitably positioned at the wear member **12**. In an embodiment, the bracket member **16** may be laterally connected to the wear member **12**. A bracket side wall **15** of the bracket member **16** may be connected to the wear member **12.**

An end of the bracket member **16** may be a free end **24** that is not connected to the wear member **12**. The opposite end of the bracket member **16** may be connected to the wear member **12**. The opposite end of the bracket member **16** may be laterally connected to the wear member **12** at the bracket side wall **15**. The bracket member **16** may be welded to the wear member **12**. In an embodiment, the bracket member **16** may be cast moulded with the wear member **12**.

In an embodiment, the bracket member **16** may have a longitudinal axis extending from the free end **24** to the opposite end.

In an embodiment, the bracket member **16** may be connected to an edge of the wear member **12** that is adjacent to the edges having the first indent **30** and the second indent **32**.

The bracket member **16** may project from the wear member **12**. The bracket member **16** may project form the wear member **12** and the free end **24** may extend beyond contact surface **13**.

In an embodiment. the bracket member **16** may be inclined relative to the wear member **12**. The longitudinal axis of the bracket member **16** may be at an angle of less than 90° relative to the contact surface **13**.

A mounting surface **43** may be formed on the bracket member **16**. The mounting surface **43** may be configured for mating to front end **54**. The mounting surface **43** may be formed on a side of the bracket member **16**. The mounting surface **43** may extend from the free end **24** to the end laterally connected to the wear member **12**.

In an embodiment, the mounting surface **43** may be formed on the bracket member **16** at the side adjacent to the bracket side wall **15**.

The mounting surface **43** may comprise a positioning portion **40** and a force transfer portion **42**. The positioning portion **40** may enable the wear member **12** to be disposed relative to the front end of the jaw in a position for mutual engagement. The force transfer portion **42** may serve transfer the crushing forces which arise during operation of the demolition tool to the jaw set of the demolition tool.

The positioning portion **40** may be located adjacent to the force transfer portion **42** on the mounting surface **43**. The positioning portion **40** may be contiguous with force transfer portion **42**_{.}

The force transfer portion **42** may precede the positioning portion **40** with reference to contact surface **13**. The force transfer portion **42** may be located adjacent the end laterally connected to the wear member **12**. The positioning portion **40** may be located adjacent the free end **24**.

The relative geometry between the position potion **40** and force transfer portion **42** may be configured such that the reciprocal inclination between the position potion **40** and force transfer portion **42** is not substantially 90° relative to the contact surface **13**. The reciprocal inclination between the position potion **40** and force transfer portion **42** may enable demolition forces to be transferred to the front end **54** while retaining mounting surface **43** in mating engagement with the front end **54**.

In an embodiment, the angle of the reciprocal inclination between the position potion **40** and force transfer portion **42** relative to the contact surface **13** may be between 0° to 85°. In an embodiment, the angle of the reciprocal inclination between the position potion **40** and force transfer portion **42** relative to the contact surface **13** may be between 95° to 180°.

The force transfer portion **42** may be disposed across the bracket member **16** extending from the bracket side wall **15** to the opposite side. A longitudinal axis may extend along the surface of the force transfer portion **42**. The longitudinal axis may extend from the bracket side wall **15** to the opposite side. In an embodiment, the longitudinal axis of the force transfer portion **42** may be perpendicular to the longitudinal axis of the bracket member **16**.

The positioning portion **40** may be disposed across the bracket member **16** extending from the bracket side wall **15** to the opposite side. A longitudinal axis may extend along the surface of the positioning portion **40**. The longitudinal axis may extend from the bracket side wall **15** to the opposite side. In an embodiment, the longitudinal axis of the positioning portion **40** may be perpendicular to the longitudinal axis of the bracket member **16**.

A longitudinal axis extending along the positioning portion **40** may be parallel to a longitudinal axis extending along the force transfer portion **42**.

A transition area may be formed between the positioning portion **40** and the force transfer portion **42**. In an embodiment, the angle of the transition area between the position potion **40** and force transfer portion **42** relative to the contact surface **13** may be between 0° to 85°. In an embodiment, the angle of the transition area between the position potion **40** and force transfer portion **42** relative to the contact surface **13** may be between 95° to 180°.

The force transfer portion **42** may be formed such that there is a large contact area between the mounting surface **43** and the front end **54**. The force transfer portion **42** may have a curved shape. The force transfer portion **42** may engage to a complementarily shaped portion on the front end **54**.

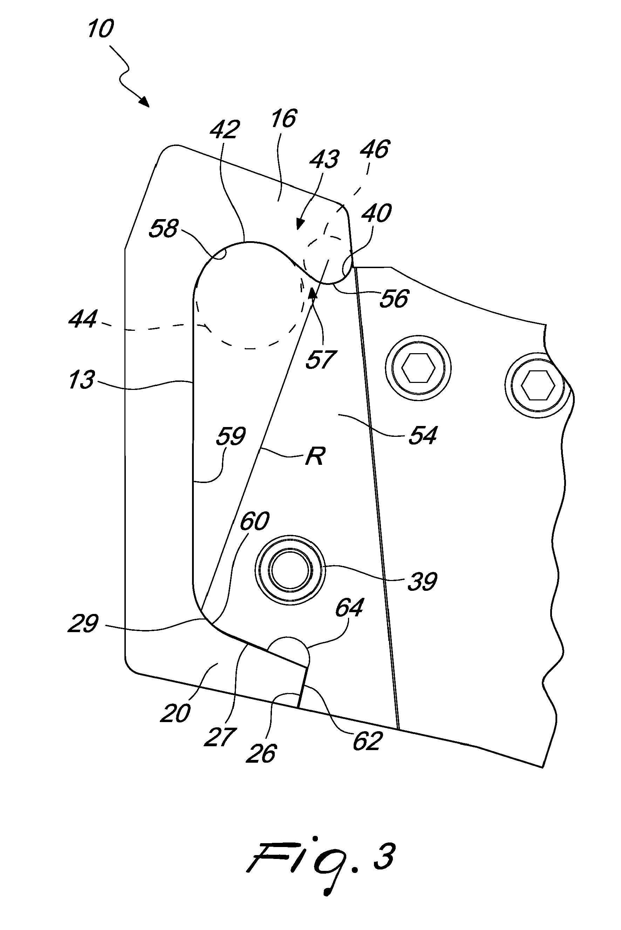

Fig. 3 illustrates the wear pack **10** mounted to the front end **54**. The mounting surface **43** may mate to the reciprocal mounting surface **57** of the front end **54**. The force transfer portion **42** may be engage to the reciprocal force transfer portion **58**. The force transfer portion **42** and the reciprocal force transfer portion **58** may have forms that are mutually matching. The force transfer portion **42** and the reciprocal force transfer portion **58** may have forms that enable their mutual engagement.

The force transfer portion **42** may have a cross section that is defined by a circular arc. The force transfer portion **42** and reciprocal force transfer portion **58** may have complementary cross sections defined by circular arcs.

With reference to Figs. 1 and 3, in an embodiment, the force transfer portion **42** may be a concave groove. The concave circular arc of the force transfer portion **42** may be a segment of a virtual first circle **44**. A central axis of the force transfer portion **42** which is parallel to a longitudinal axis thereof may extend through the centre of the virtual first circle **44**.

The concave force transfer portion **42** may engage with the reciprocal force transfer portion **58** formed as a convex ridge. The convex ridge of the reciprocal force transfer portion **58** may fit in the concave groove of the force transfer portion **42**.

In an embodiment, the force transfer portion **42** may be a convex ridge. The convex circular arc of the force transfer portion **42** may be a segment of a virtual first circle. A central axis of the force transfer portion **42** which is parallel to a longitudinal axis thereof may extend through the centre of the virtual first circle.

The convex force transfer portion **42** may engage with the reciprocal force transfer portion **58** formed as a concave groove. The convex ridge of the force transfer portion **42** may fit in the concave groove of the reciprocal force transfer portion **58**.

The positioning portion **40** may be formed such that there is contact area between the mounting surface **43** and the front end **54** which allows the positioning of the wear pack **10** relative to the front end **54**. The positioning portion **40** may engage to a complementarily shaped portion on the front end **54**.

With reference to Fig. 3, the positioning portion **40** may be engaged to the reciprocal positioning portion **56**. The positioning portion **40** and the reciprocal positioning portion **56** may have forms that are mutually matching. The positioning portion **40** and the reciprocal positioning portion **56** may have forms that enable their mutual engagement.

The positioning portion **40** may have a cross section that is defined by a circular arc. The positioning portion **40** and reciprocal positioning portion **56** may have complementary cross sections defined by circular arcs.

With reference to Figs. 1 and 3, in an embodiment, the positioning portion **40** may be a convex ridge. The convex circular arc of the positioning portion **40** may be a segment of a virtual second circle **46**. A central axis of the positioning portion **40** which is parallel to a longitudinal axis thereof may extend through the centre of the virtual second circle **46**.

The convex positioning portion **40** may engage with the reciprocal positioning portion **56** formed as a concave groove. The convex ridge of the positioning portion **40** may fit in the concave groove of the reciprocal positioning portion **56**.

In an embodiment, the positioning portion **40** may be a concave groove. The concave circular arc of the positioning portion **40** may be a segment of a virtual second circle. A central axis of the positioning portion **40** which is parallel to a longitudinal axis thereof may extend through the centre of the virtual second circle.

The concave positioning portion **40** may engage with the reciprocal positioning portion **56** formed as a convex ridge. The convex ridge of the reciprocal positioning portion **56** may fit in the concave groove of the positioning portion **40**.

In an embodiment, the arc length of the force transfer portion **42** is greater than the arc length of the positioning portion **40**.

In an embodiment, the central axis of the positioning portion **40** may be parallel to the central axis of the force transfer portion **42**. In an embodiment, the reciprocal positioning portion **56** may have a central axis that is parallel to the positioning portion **40** when the wear pack **10** is mounted to the front end **54**. The reciprocal force transfer portion **58** may have a central axis that is parallel to the force transfer portion **42** when the wear pack **10** is mounted to the front end **54**.

An intersecting plane on the mounting surface **43** may be defined by a plane intersecting both the central axis of the positioning portion **40** and the central axis of the force transfer portion **42**. An intersecting plane on the reciprocal mounting surface **57** may be defined by a plane intersecting both the central axis of the reciprocal positioning portion **56** and the central axis of the reciprocal force transfer portion **58**. In an embodiment, the angle between the intersecting plane on the mounting surface **43** and the contact surface **13** may be equal to the angle between the intersecting plane on the reciprocal mounting surface **57** and a reciprocal contact surface **59**.

The central axis of the positioning portion **40** may represent the rotational axis of the wear pack **10**. The bracket member **16** may rotate about the rotational axis relative to the front end **54**.

The wear pack **10** may further comprise an abutment member **20**. With reference to Fig. 3, the abutment member **20** may co-operate with the bracket member **16** as a receiving pair to interposingly receive a section of the front end **54**.

With reference to Fig. 1, the abutment member 20 may project from the wear member **12**. In an embodiment, the bracket member **16** may be formed as a plate.

The abutment member **20** may be connected to the wear member **12**. The abutment member **20** may be suitably positioned at the wear member **12**. In an embodiment, the abutment member **20** may be laterally connected to the wear member **12**. An abutment side wall **21** of the abutment member **20** may be connected to the wear member **12**.

An end of the abutment member **20** may be an abutment end **26** that is not connected to the wear member **12**. The opposite end of the abutment member **20** may be connected to the wear member **12**. The opposite end of the abutment member **20** may be laterally connected to the wear member **12** at the abutment side wall **21**. The abutment member **20** may be welded to the wear member **12**. In an embodiment, the abutment member **20** may be cast moulded with the wear member **12**.

In an embodiment, the abutment member **20** may have a longitudinal axis extending from the abutment end **26** to the fixed opposite end.

In an embodiment, the abutment member **20** may be connected to an edge of the wear member **12** that is adjacent to the edges having the first indent **30** and the second indent **32**. In an embodiment, the abutment member **20** may be connected to the same edge of the wear member **12** connected to the bracket member **16**. The abutment member **20** may be disposed on the wear member **12** to be directly opposite the bracket member **16**. The abutment member **20** and the bracket member **16** may be mutually opposed on the wear member **12**.

The abutment member **20** may project from the wear member **12**. The abutment member **20** may project form the wear member **12** and the abutment end **26** may extend beyond contact surface **13**.

An abutment surface **27** may be formed on the abutment member **20**. The abutment surface **27** may be configured for engaging to a portion of the front end **54**. The abutment surface **27** may be formed on a side of the abutment member **20**. The abutment surface **27** may extend from the abutment end **26** to the end laterally connected to the wear member **12**.

In an embodiment, the abutment surface **27** may be formed on the abutment member **20** at the side adjacent to the abutment side wall **21**. In an embodiment, the abutment surface **27** may be perpendicular to the contact surface **13**. In an embodiment, the abutment surface **27** may be inclined to the contact surface **13**.

With reference to Fig. 3, the abutment surface **27** may abut a reciprocal abutment surface **60** formed on the front end **54**. The abutment surface **27** and the reciprocal abutment surface **60** may be formed to be mutually corresponding. The abutment end **26** may abut against a limit surface **62** on the front end **54**. The abutment end **26** and the limit surface **62** may be formed to be mutually corresponding. The free end **24** of the bracket member **16** may be formed further from the contact surface **13** than the abutment end **26**.

In an embodiment, the line **R** may extend from the central axis of the positioning portion **40** to the reciprocal abutment surface **60**. Line **R** may represent a radius extending from the rotational axis of the wear pack **10** to an area on the front end that is cleared by the abutment member **20** when the wear pack **10** is mounted or dismounted. The length of line R may define the distance of the abutment member **20** from the central axis of the positioning portion **40**. The length of line R may define minimum distance of the abutment surface from the central axis of the positioning portion **40**.A transition portion **29** may be formed between the abutment surface **27** and the contact surface **13**. The transition portion **29** may be formed to rest against the reciprocal abutment surface **60**. The transition portion **29** and the reciprocal abutment surface **60** may have complementary shapes and dimension for mutual engagement.

In an embodiment, the angle between the abutment surface **27** and the contact surface **13** may be equal to the angle between reciprocal abutment surface **60** and the reciprocal contact surface **59**. In an embodiment, the angle of the abutment surface **27** relative to the wear member **12** may be provided such that the wear pack **10** may be mounted on to the front ends **53** and removed therefrom by rotation of the wear pack **10** about the rotation axis.

With reference to Fig. 1, the wear pack **10** may comprise a second bracket member **16** and a second abutment member **20**. The second bracket member **16** and the second abutment member **20** may cooperate as a second receiving pair to interposingly receive a section of the front end **54**. The second bracket member **16** and the second abutment member **20** may be spaced from the first receiving pair. The first and second receiving pairs may be formed on opposite ends of the wear member **12** adjacent to the edges having the first and second indents **30, 32.**

The wear pack **10** may further comprise mutually opposed side plates **18** wherein each side plate **18** may be connected to the first and second receiving pair. The side plates **18** may be perpendicular to the contact surface **13**.

In an embodiment, the contact surface **13** may extend to the side plates **18**. The side of the force transfer portion **42** may be level with the contact surface **13**. The circular arc of the force transfer portion **42** may terminate at the contact surface **13**. The force transfer portion **42** may be bordered on opposed sides by the positioning portion **40** and the contact surface **13.**

The side plates **18** may be connected at an end to the bracket members **16**. At opposite ends the side plates **18** may be connected to the abutment members **20**. A free plate side **22** may be contiguous with the free ends **24** of the bracket members **16**. The plate side opposite the free plate side **22** may be connected to the wear member **12**. The free plate side **22** may be formed further from the contact surface **13** than the abutment end **26**. The side plates **18** may comprise rounded plate edges **28** between the free plate sides **22** and the ends connected to the abutment members **20**.

The side plates **18** may comprise apertures **36**. The apertures **36** may be located on each side plate **18** adjacent to each abutment member **20**.

In an embodiment, each side plate **18,** abutment member **20** and bracket member **16** may be integrally formed as a wear end **14**. The wear pack **10** may comprise a pair of wear ends **14** disposed at either ends of the wear member **12**. The wear ends **14** may be formed on opposite ends of the wear member **12** adjacent to the edges having the first and second indents **30, 32.**

With reference to Fig 2, the wear ends **14** may rest against the sides of the front ends **54**. The wear ends **14** may protect the sides of the front end **54**. The apertures **36** may enable a retaining bolt **38** to be inserted through the side plates **18** into the front end **54**

The retaining bolt **38** may not clamp onto the side plates **18**. When the retaining bolts **38** may be secured into the front end **54** the bolt heads may be flush with the side plates **18**. The bolt heads may have a smaller diameter than the apertures **36** in the side plates **18** allowing play between the retaining bolts **38** and the side plates **18**. The wear pack **10** may be retained at the front end **54** by the side plates **18** in the loose abutting engagement with the bolt heads of the retaining bolts **38**.

The wear ends **14** may have base members **19** extending in a direction away from the free ends **24**, free plate sides **22** and abutment ends **26**. The base members **19** may provide wear surfaces that may contact materials to be crushed or cut. The front edge **54** may be provided with a groove **64** to ensure clearance between the wear pack **10** and the front end **54**.

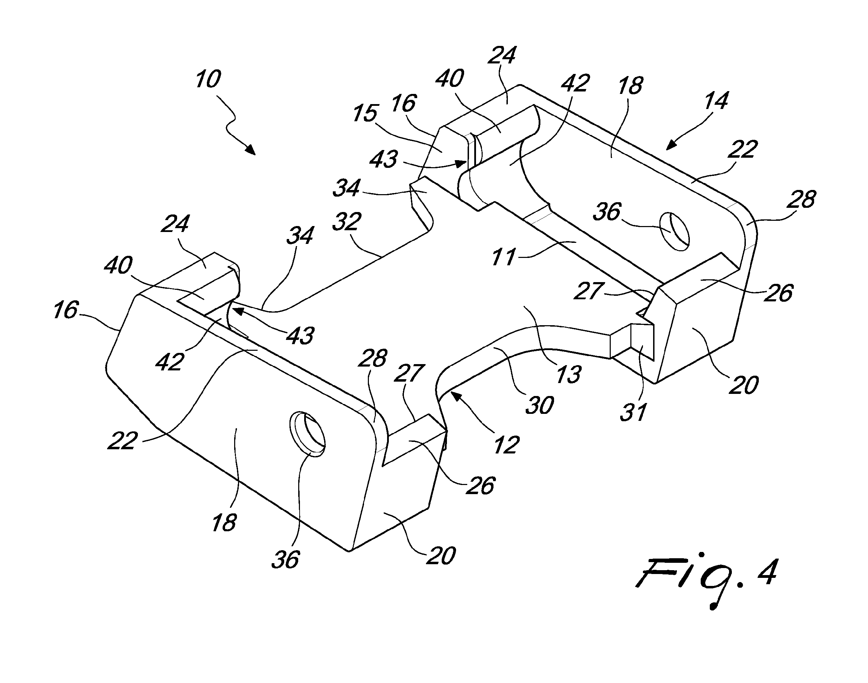

Fig. 4 illustrates a second embodiment of the wear pack **10**. The portions of the contact surface **13** adjacent to the side plates **18** may be recessed into the wear ends **14** forming recessed portions **11**. The recessed portions **11** may extend into wear ends **14** in a direction parallel to the side plates **18**.

The recessed portions **11** may be not be level with the force transfer portion **42**. The circular arc of the force transfer portion **42** may terminate at the contact surface **13**. The force transfer portion **42** may be bordered on opposed sides by the positioning portion **40** and the contact surface **13**.

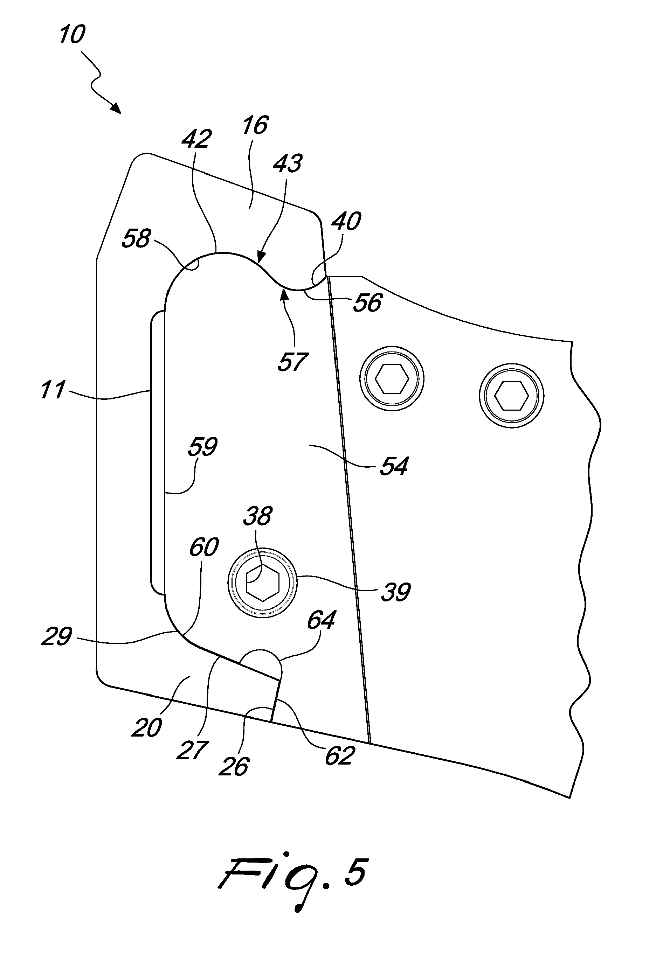

With reference to Fig. 5, the recessed portions **11** may not be in contact with the reciprocal mounting surface **59** when the wear pack is mounted on the front end **54**. The force transfer portion **42** may still engage to the reciprocal force transfer portion **58** as described above. The reciprocal mounting surface **59** may still be in contact with the mounting surface **13** as described above.

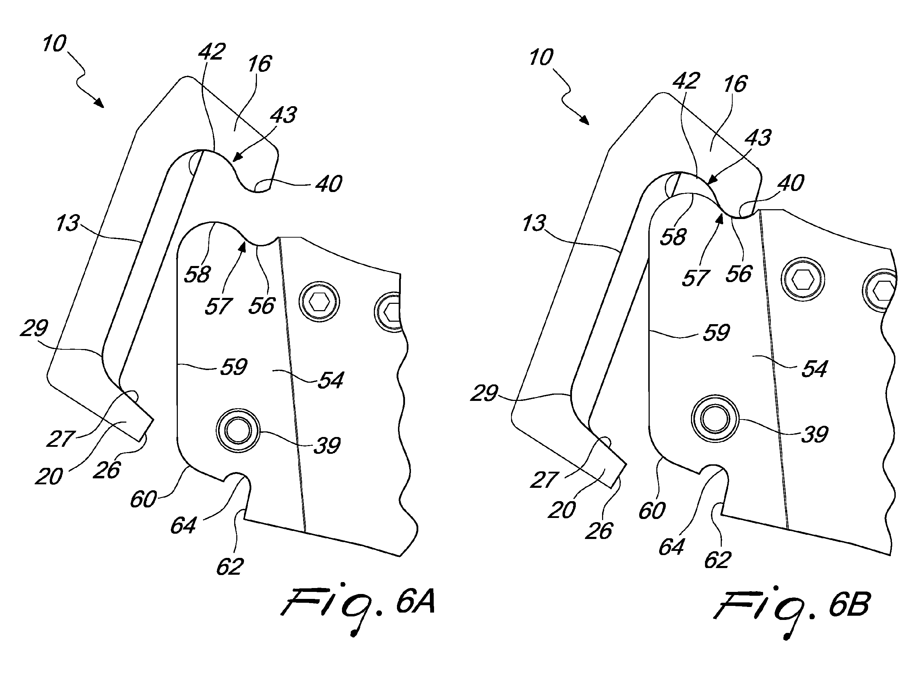

With reference to Fig. 6A, method of assembling a wear pack **10** on the jaw **52** of a demolition tool may comprise the following steps. The wear member **12** may be provided to shield the front end **54**. The wear member **12** may have a contact surface **13** to rest against the front end **54**. The bracket member **16** may be provided to project from the wear member **12** and to have a mounting surface **43** that is configured for mating the reciprocal mounting surface **57** on the front end **54**. The mounting surface **43** may have a positioning portion **40** that is contiguous with a force transfer portion **42**.

The wear pack **10** may be brought into alignment with the front end **54**. The wear pack **10** may be aligned such that the intersecting plane on the mounting surface **43** may be inclined relative to the intersecting plane on the reciprocal mounting surface **57**. The positioning portion **40** may be brought into a position to engage the reciprocal positioning portion **56**.

With reference to Fig. 6B, the positioning portion **40** may be engaged to the reciprocal positioning portion **56** at an engagement point. At engagement of the positioning portion **40** to the reciprocal positioning portion **56**, the force transfer portion **42** may be aligned to engage the reciprocal force transfer portion **58**. The contact surface **13** may be aligned to engage the reciprocal contact surface **59**. The abutment surface **27** may be aligned to slidingly engage the reciprocal abutment surface **60**.

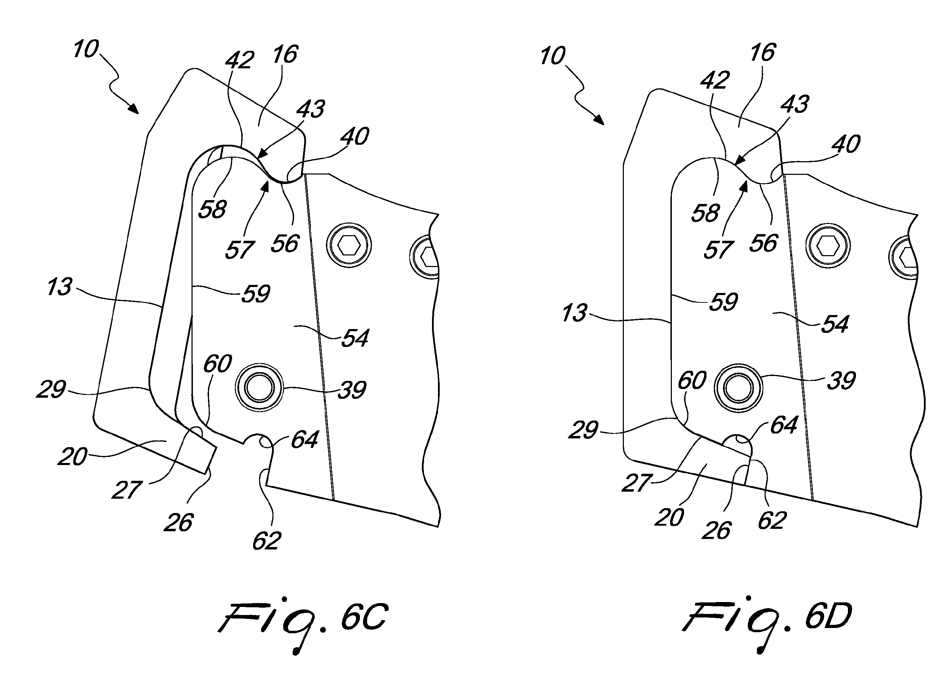

With reference to Fig. 6C, the bracket member **16** may be rotated towards the front end **54** at the engagement point of the positioning portion **40** and the reciprocal positioning portion **56**. The bracket member **16** may be rotated about the rotation axis of the wear pack **10.**

In an embodiment, the positioning portion **40** and the reciprocal positioning portion **56** may have complementary cross sections defined by circular arcs. In an embodiment, the positioning portion **40** may be a convex ridge and the reciprocal positioning portion **56** may be a concave groove.

The rotation of the bracket member **16** may move the force transfer portion **42** closer to the reciprocal force transfer portion **58**. The contact surface **13** may move closer to the reciprocal contact surface **59**. The abutment surface **27** may move closer to the reciprocal abutment surface **60**. The abutment surface **27** may slidingly engage the reciprocal abutment surface **60**. The abutment member **20** may approach the limit surface **62**.

With reference to Fig. 6D, the bracket member **12** may be rotated to a point the abutment member **20** abuts against the limit surface **62** on the front end **54**. The bracket member **12** may no longer undergo further rotation.

At abutment of the abutment member **20** against the limit surface **62**, the force transfer portion **42** may engage to the reciprocal force transfer portion **58**. The contact surface **13** may be engaged to the reciprocal contact surface **59**. The transition portion **29** may rest against the reciprocal abutment surface **60**. The aperture **36** may be aligned to a reciprocal aperture **39** that is formed on the front end **54**.

In an embodiment, the force transfer portion **42** and the reciprocal force transfer portion **58** may have complementary cross sections defined by circular arcs. In an embodiment, the force transfer portion **42** may be a concave groove and the reciprocal force transfer portion **58** may be a convex ridge.

The retaining bolt **38** may be inserted through the aperture **36** and the reciprocal aperture **39**.

The method may be reversed to dismount the wear pack **10** from the front end **54**. Initially, the retaining bolt **38** may be removed from the aperture **36** and the reciprocal aperture **39**. The bracket member **16** may be rotated about the rotation axis to rotate the wear pack **10** relative to the front end **54**. The contact surface **13** may be rotated away from teh reciprocal contact surface **59**. Upon clearance of the abutment surface **27** with respect to the reciprocal abutment surface **60**, the positioning portion **40** may be disengaged from the reciprocal positioning portion **56** on the reciprocal mounting surface **57**.

The skilled person would appreciate that foregoing embodiments may be modified or combined to obtain the wear pack **10** of the present disclosure.

### Industrial Applicability

This disclosure describes a wear pack **10**. The wear pack **10** may be mounted to the jaw set **50** of a demolition tool such as multiprocessors, pulverizers, crushers and other demolition tools that may have a jawset or grapple tine which have closing movements. The wear pack **10** may be mounted to the front end **53** of the upper jaw **51** or the front end **54** of the lower jaw **52**. The wear pack **10** may shield the front ends **53**, **54** from wear during demolition operations such as crushing or cutting of materials.

The wear pack **10** may have a positioning portion **40** to aid in the alignment and engagement thereof to the front ends **53**, **54**. The positioning portion **40** may initially engage to the reciprocal positioning portion **56** thereby aligning the other surfaces of the wear pack **10** to the reciprocal surfaces of the front end **54** for mutual engagement.

The wear pack **10** may have a force transfer portion **42** to aid in the transfer of forces generated in the demolition of materials into the front ends **53**, **54**. The force transfer portion **42** may engage with the reciprocal force transfer portion **58** such that a large mutual contact surface is formed for the transfer of demolition forces. The rest of the wear pack may be subject to minimal demolition forces. The wear pack **10** may be mounted to the front ends **53**, **54** through rotation about an axis of rotation that corresponds to the centre axis of the positioning portion **40**. The distance from the centre axis of the positioning portion **40** to an abutment surface of the front end **54** may be used to determine the form and dimension of the wear pack **10** in relation to the abutment members **20** for the clearance of the wear pack **10** at the reciprocal abutment surface **60** which represents the part of the front end **54** furthest from the reciprocal mounting surface **57**.

The wear pack **10** may be easily and efficiently mounted on and dismounted from the front ends **53**, **54**. Once a wear pack **10** is spent due to operation of the demolition tool, the wear pack **10** may be easily replaced with a substitute wear pack **10**.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A wear pack (10) for a jaw (52) of a demolition tool, the wear pack (10) comprising:
a wear member (12) for shielding a front end (54) of the jaw (52), the wear member (12) having a contact surface (13) to rest against the front end (54); and
a bracket member (16) projecting from the wear member (12) for coupling the front end (54) and having a mounting surface (43) configured for mating to a reciprocal mounting surface (57) on the front end (54),
wherein the mounting surface (43) comprises a positioning portion (40) contiguous with the force transfer portion (42).

2. The wear pack (10) according to claim 1 wherein the force transfer portion (42) precedes the positioning portion (40) with reference to contact surface (13).

3. The wear pack (10) according to claim 1 or 2 wherein an angle of the reciprocal inclination between the position potion (40) and force transfer portion (42) relative to the contact surface is between 0° to 85° or 95° to 180°.

4. The wear pack (10) according to claim 1, 2 or 3 wherein the force transfer portion (42) and the positioning portion (40) have cross sections defined by circular arcs.

5. The wear pack (10) according to claim 4 wherein the arc length of the force transfer portion (42) is greater than the arc length of the positioning portion (40).

6. The wear pack (10) according to claim 4 or 5 wherein the positioning portion (40) is a convex ridge and the force transfer portion (42) is a concave groove.

7. The wear pack (10) according to any of the preceding claims wherein an axis extending along the force transfer portion (42) is parallel to an axis extending along the positioning portion (40).

8. The wear pack (10) according to any one of the preceding claims further comprising an abutment member (20) projecting from the wear member (12) wherein the abutment member (20) cooperates with the bracket member (16) as a receiving pair to interposingly receive a section of the front end (54).

9. The wear pack (10) according to claim 8 wherein the abutment member (20) and the bracket member (16) are mutually opposed on the wear member (12).

10. The wear pack (10) according to claim 8 or 9 further comprising a second bracket member (16) and a second abutment member (20) cooperating as a second receiving pair and being spaced from the first receiving pair.

11. The wear pack (10) according to claim 10 further comprising mutually opposed side plates (18) wherein each side plate (18) is connected to the first and second receiving pair.

12. A method of assembling a wear pack (10) on a jaw (52) of a demolition tool, the method comprising the steps of:
providing a wear member (12) for shielding the front end (54) of the jaw (52), the wear member (12) having a contact surface (13) to rest against the front end (54);
providing a bracket member (16) projecting from the wear member (12) and having a mounting surface (43) configured for mating a reciprocal mounting surface (57) on the front end (54), the mounting surface (43) having a positioning portion (40) contiguous with a force transfer portion (42); and
engaging the positioning portion (40) to a reciprocal positioning portion (56) on the reciprocal mounting surface (57).

13. The method of claim 12 further comprising the step of rotating the bracket member (16) to the front end (54) at the engagement point of the positioning portion (40) and the reciprocal positioning portion (56) wherein the positioning portion (40) and the reciprocal positioning portion (56) have complementary cross sections defined by circular arcs.

14. The method of claim 13 further comprising the step of abutting the abutment member (20) against a limit surface (62) on the front end (54).

15. The method of claim 14 wherein the step of abutting the abutment member (20) against a limit surface (62) comprises engaging the force transfer portion (42) to a reciprocal force transfer portion (58) on the reciprocal mounting surface (57) wherein the force transfer portion (42) and the reciprocal force transfer portion (58) may have complementary cross sections defined by circular arcs.
